# EUROPEAN PATENT SPECIFICATION

(11) **EP 2 719 896 B1**
(45) Date of publication and mention of the grant of the patent: **06.12.2017**
(21) Application number: 13188354.8
(22) Date of filing: 11.10.2013
(51) Int. Cl.: F04B 35/04, F04B 39/02, F04B 39/12, F04B 53/14

(54) **Reciprocating compressor**
Kolbenkompressor
Compresseur à mouvement alternatif

(30) Priority: 12.10.2012 KR 20120113795
(43) Date of publication of application: 16.04.2014
(73) Proprietor: LG Electronics Inc., Yeongdeungpo-gu Seoul, 150-721 (KR)
(72) Inventor: Lee, Jongkoo, Seoul (KR); Park, Jungsik, Seoul (KR); Park, Suho, Seoul (KR)
(74) Representative: Vossius & Partner Patentanwälte Rechtsanwälte mbB

(56) References cited:
- WO-A1-2009/054636
- US-A1- 2004 057 844
- US-B2- 6 881 042

## Description

### BACKGROUND OF THE INVENTION

### 1. Field of the invention

The present disclosure relates to a reciprocating compressor, and more particularly, to a reciprocating compressor in which a motor unit and a compressor unit are separately provided.

### 2. Description of the related art

In general, a reciprocating compressor employs a method of inhaling, compressing, and discharging refrigerant while a piston performs a reciprocating movement at high speed within a cylinder. The reciprocating compressor may be divided into a connection type and a vibration type according to the driving method of its piston.

A connection type reciprocating compressor employs a method in which a piston is connected to a rotation shaft of the rotation motor to compress refrigerant while performing a reciprocating movement within a cylinder. On the contrary, a vibration type reciprocating compressor employs a method in which a piston is connected to a mover of the reciprocating motor to compress refrigerant while performing a reciprocating movement with vibration within a cylinder. The present disclosure relates to a vibration type reciprocating compressor, and hereinafter, the vibration type reciprocating compressor will be abbreviated as a reciprocating compressor.

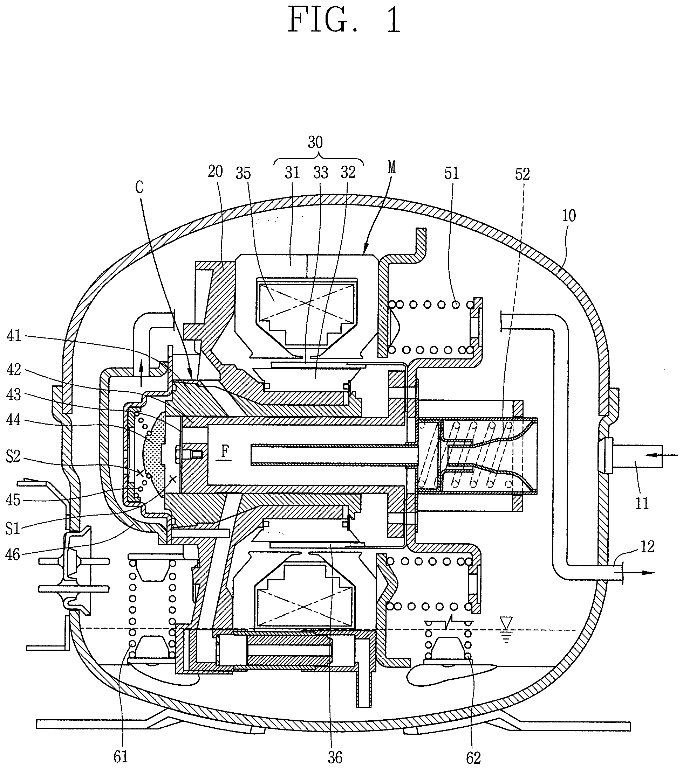

FIG. 1 is a cross-sectional view illustrating an embodiment of a reciprocating compressor in the related art.

As illustrated in the drawing, in a reciprocating compressor in the related art, a frame 20 is elastically provided by a plurality of support springs 61, 62 at an inner space of an enclosed shell 10, and an outer stator 31 and an inner stator 32 of a reciprocating motor 30 constituting a motor unit (M) and a cylinder 41 constituting a compressor unit (C) which will be described later are provided on the frame 20. The cylinder 41 is provided within a range of being overlapped with the stators 31, 32 of the reciprocating motor 30 in the axial direction.

A piston 42 coupled to a mover 33 of the reciprocating motor 30 to constitute the compressor unit (C) along with the cylinder 41 is inserted and coupled to the cylinder 41 to perform a reciprocating movement, and a plurality of resonant springs 51, 52 for inducing the resonant movement of the piston 42 are provided at both sides of the movement direction of the piston 42, respectively.

Furthermore, a suction pipe 11 connected to an evaporator (not shown) of the refrigeration cycle is provided to communicate with an inner space of the shell 10, and a discharge pipe 12 connected to a condenser (not shown) of the refrigeration cycle apparatus is provided to communicate with one side of the suction pipe 11.

Furthermore, a compression space (S1) is formed in the cylinder 41, and a suction passage (F) for guiding refrigerant to the compression space (S1) is formed on the piston 42, and a suction valve 43 for opening and closing the suction passage (F) is provided at an end of the suction passage (F), and a discharge valve 44 for opening and closing the compression space (S1) of the cylinder 41 is provided at a leading end surface of the cylinder 41.

Unexplained reference numerals 35, 36 and 45 on the drawing denote a coil, a magnet and a valve spring, respectively.

According to the foregoing reciprocating compressor in the related art, when power is applied to the coil 35 of the reciprocating motor 30, the mover 33 of the reciprocating motor 30 performs a reciprocating movement. Then, the piston 42 coupled to the mover 33 inhales refrigerant into an inner space of the piston 42 through the suction pipe 11 while performing a reciprocating movement at high speed within the cylinder 41 at an inner space of the shell 10. Then, refrigerant at an inner space of the shell 10 is inhaled into the compression space (S1) of the cylinder 41 through the suction passage (F) of the piston 42, and discharged from the compression space (S1) during the forward movement of the piston 42, thereby repeating a series of processes of moving refrigerant to the condenser of the refrigeration cycle through the discharge pipe 12.

However, according to the foregoing reciprocating compressor in the related art, the compressor unit (C) is provided in an overlapping manner at an inner side of the motor unit (M), and therefore, a magnetic flux generated from the motor unit (M) may be leaked to the compressor unit (C) along the frame 20 to increase motor loss, and the reciprocating movement of the piston 42 may be unstabilized by the magnetic flux leaked to the compressor unit (C). Besides, when the cylinder 41 and piston 42 are formed of a non-magnetic material to prevent the magnetic flux of the motor unit (M) from being leaked to the compressor unit (C), it may cause a problem of increasing production cost and reducing the reliability of the compressor due to low abrasion resistance.

In addition, according to a reciprocating compressor in the related art, the mover 33 is inserted between both the stators 31, 32 and the piston is inserted into the cylinder 41 in a state that the piston 42 is coupled to the mover 33 and the outer stator and inner stator are assembled together to align the concentricity of the mover 33 and piston 42, and thus it may be difficult to allow the concentricity of the motor unit (M) and compressor unit (C) to coincide, and due to this, mismatches may frequently occur in which the concentricity of the motor unit (M) and compressor unit (C) is deviated, thereby deteriorating compressor performance while causing the leakage of refrigerant since an abrasion between the cylinder 41 and piston 42 is increased or a gap between the cylinder 41 and piston 42 is partially out of the permissible range.

WO 2009/054636 relates to a linear compressor provided with three main springs having a resonance frequency matched to a driving frequency and includes a back cover having a support portion for constraining the movement of a rear main spring in a transverse direction.

US 2004/0057844 relates to a frame of a reciprocating compressor composed of two components and having an oil flow path provided therein when the two frame components are assembled.

US 6,881,042 relates to a reciprocating compressor including: a reciprocating motor having outer and inner stators provided with at least one step portion at both sides thereof, and an armature linearly moving therebetween; a compression unit having a cylinder and a piston linearly and reciprocally moving in the cylinder; a suction unit sucking a gas into the compression unit; a discharge unit discharging the compressed gas; a resonance spring unit elastically supporting the piston and the armature; and a frame unit supporting the compression unit and the reciprocating motor.

### SUMMARY OF THE INVENTION

An object of the present disclosure is to provide a reciprocating compressor capable of preventing a magnetic flux generated from the motor unit from being leaked to the compressor unit to enhance motor performance as well as allowing the material of the cylinder and piston constituting the compressor unit to be formed of a ferromagnetic material having a high abrasion resistance with a low cost so as to reduce production cost and enhance reliability.

Another object of the present disclosure is to provide a reciprocating compressor capable of facilitating the concentricity of the motor unit and compressor unit to coincide so as to reduce assembly cost and decrease an abrasion between the cylinder and the piston as well as uniformly maintaining a gap between the cylinder and the piston within the permissible range so as to enhance compressor performance.

In order to accomplish the objective of the present disclosure, there is provided a reciprocating compressor according to independent claim 1. Further preferred features are set forth in dependent claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a longitudinal cross-sectional view illustrating a reciprocating compressor in the related art;
FIG. 2 is a longitudinal cross-sectional view illustrating a reciprocating compressor according to the present disclosure;
FIG. 3 is a longitudinal cross-sectional view illustrating a reciprocating compressor according to FIG. 2 in which the motor unit and compressor unit are divided into blocks;
FIG. 4 is a perspective view illustrating a reciprocating compressor according to FIG. 2 in which a second support member is coupled to a magnetic holder;
FIG. 5 is a cross-sectional view along line "I-I" in FIG. 3; and
FIGS. 6 and 7 are semi-cross-sectional view illustrating an assembly process of the compressor unit and motor unit in a reciprocating compressor according to FIG. 3.

### DETAILED DESCRIPTION OF THE INVENTION

Hereinafter, a reciprocating compressor according to an embodiment of the present disclosure will be described in detail with reference to the accompanying drawings.

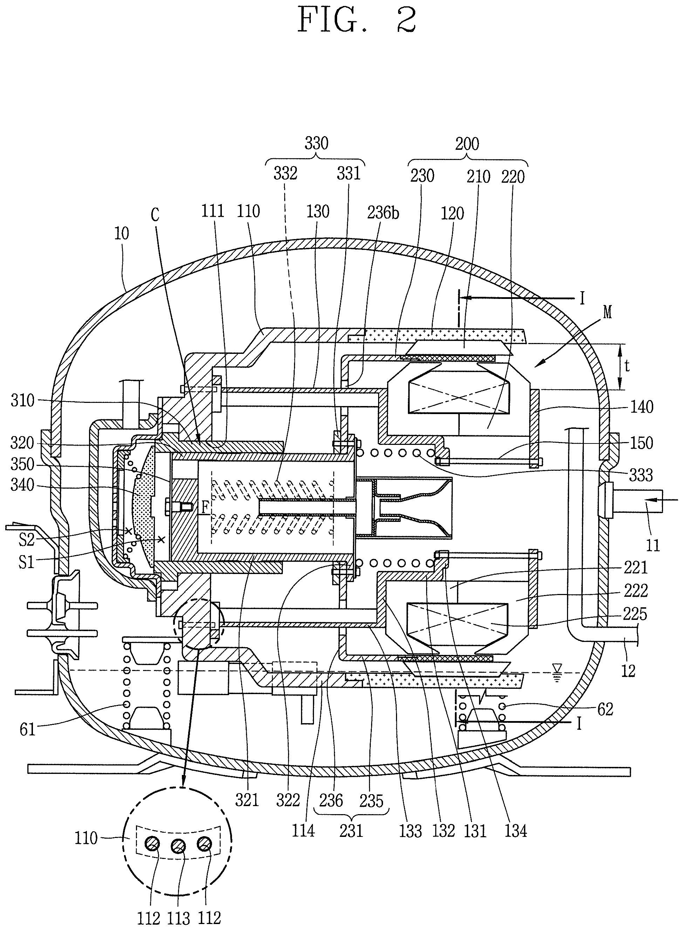

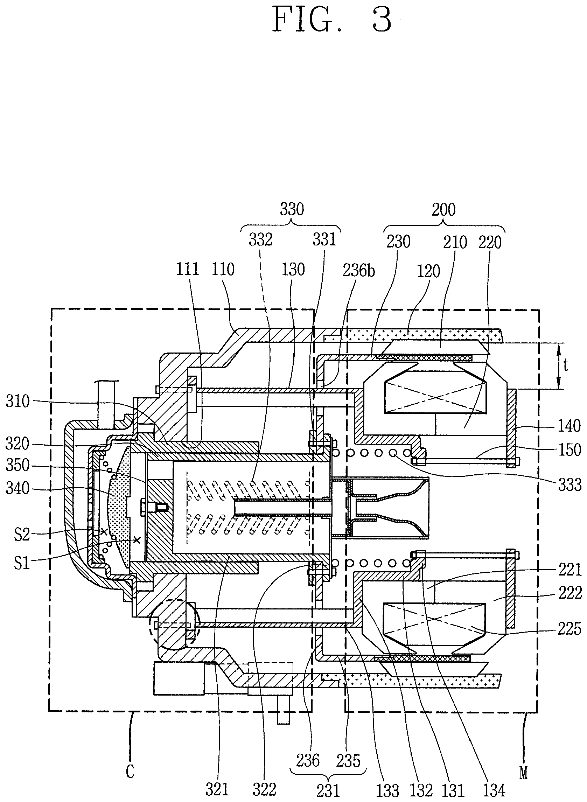

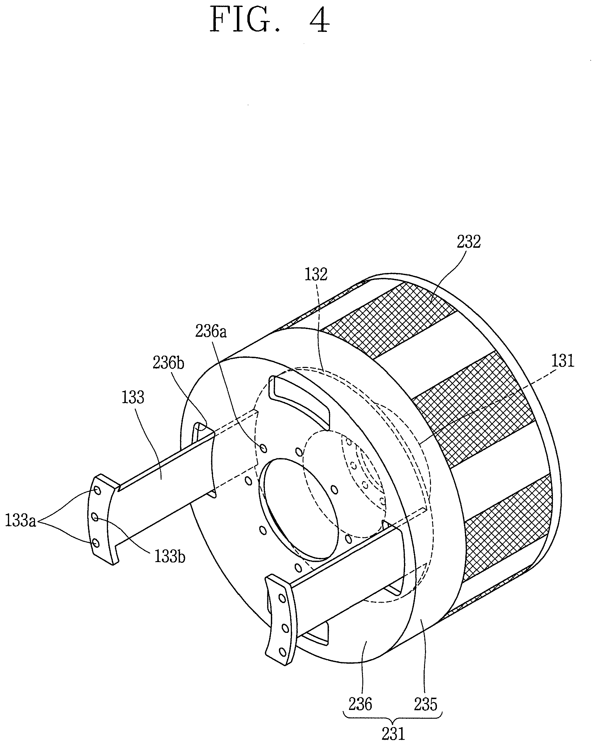

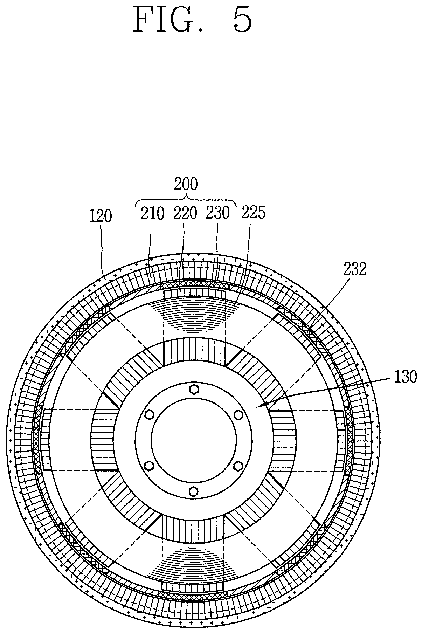

FIG. 2 is a longitudinal cross-sectional view illustrating a reciprocating compressor according to the present disclosure, and FIG. 3 is a longitudinal cross-sectional view illustrating a reciprocating compressor according to FIG. 2 in which the motor unit and compressor unit are divided into blocks, and FIG. 4 is a perspective view illustrating a reciprocating compressor according to FIG. 2 in which a second support member is coupled to a magnetic holder, and FIG. 5 is a cross-sectional view along line "I-I" in FIG. 3.

As illustrated in the drawing, in a reciprocating compressor according to the present embodiment, a frame 110 may be provided at an inner space of the shell 10 to be elastically supported by a plurality of support springs 61, 62 which will be described later, a motor unit (M) for generating a reciprocating force may be disposed at one side of the frame 110 with a predetermined distance from the frame 110 by support members 120, 130, 140 which will be described later, and a compressor unit (C) for receiving the reciprocating force of the motor unit (M) to compress refrigerant may be disposed between the frame 110 and the motor unit (M).

The inner space of the shell 10 is enclosed, and the suction pipe 11 for guiding the refrigerant of the refrigeration cycle to the inner space of the shell 10 may be connected to one wall surface of the shell 10, and the discharge pipe 12 for discharging refrigerant compressed in the compression space (S1) of the cylinder 310 which will be described later to the refrigeration cycle may be connected to one side of the suction pipe 11. Furthermore, a plurality of support springs 61, 62 may be provided at the bottom surface of the shell 10, and the motor unit (M) and compressor unit (C) as well as the frame 110 may be elastically supported to the support springs 61, 62 to maintain a predetermined distance from the bottom surface of the shell 10.

The frame 110 may be formed in a circular disc shape, in which a cylinder hole 111 is formed at the central portion thereof such that the cylinder 310 is inserted and coupled thereto, and fastening holes 112 for bolt-fastening a second support member 130 which will be described later are formed around the cylinder hole 111, and a reference hole 113 for aligning the fastening position of the second support member 130 is formed between the fastening holes 112. Furthermore, as illustrated in FIG. 2 or 3, a boss portion 114 may be protruded in the direction of the reciprocating motor 200 at an edge of the frame 110 to be integrally coupled to the first support member 120 which will be described later. The outer diameter of the boss portion 114 may be preferably formed to be greater than that of the magnet frame 231, thereby facilitating the assembly work of the second support member 130.

The reciprocating motor 200 constituting the motor unit (M) may include an outer stator 210 coupled to the frame 110 by the first support member 120, an inner stator 220 disposed with a predetermined gap at an inner side of the outer stator 210 to be coupled to the frame 110 by the second support member 130 and provided with a coil 225, and a mover 230 interposed between the outer stator 210 and inner stator 220 and provided with a magnet 232 corresponding to the coil 225 to perform a reciprocating movement along the direction of a magnetic flux induced by the magnet 232 and coil 225.

The outer stator 210 may be formed in a cylindrical shape by radially laminating a plurality of sheets of thin stator cores 211, respectively, but may be integrally formed by sintering powder with a magnetic material.

The inner stator 220 may be formed in a cylindrical shape such that a plurality of sheets of stator cores (not shown) are laminated to form a core block 221, and then a plurality of core blocks 221 are radially laminated on one another. A ring-shaped coil 225 should be inserted into an inner portion of the inner stator 220 and a distance between pole portions should be small to the minimum, and thus a first core block 221 and a second core block 223 with an L-shape may be symmetrically coupled to each other.

The mover 230 may include a magnetic holder 231 bolt-fastened with the piston 320, and a plurality of magnets 232 coupled to an outer circumferential surface of the magnetic holder 231 to be disposed at a gap between the outer stator 210 and inner stator 220.

The magnetic holder 231 may include a magnet support portion 235 formed in a cylindrical shape to be supported by the magnet 232, and a piston connecting portion 236 extended in the central direction from a rear end of the magnet support portion 235 to be bolt-coupled to a flange portion 322 of the piston 320. A plurality of frame side fastening holes 236a to be bolt-coupled to the piston 320 may be formed along the circumferential direction at the piston connecting portion 236 of the magnetic holder 231, and a plurality of frame side through holes 236b may be formed around the frame side fastening holes 236a to allow the fixing support portion 133 of the second support member 130 to pass therethrough.

The first support member 120 may be coupled to the frame 110 by forming a non-magnetic material such as aluminium in a cylindrical shape to surround an outer circumferential surface of the outer stator 210 or may be fabricated by integrally molding it on the frame 110 using an insert-die-casting or molding method. While a front end (delivery stroke direction side end portion of the piston) of the first support member 120 may be coupled to the frame 110, a rear end thereof (intake stroke direction side end portion of the piston) may be separated from the second support member 130 or third support member 140 which will be described later by a predetermined distance (t) to prevent magnetic flux leakage.

The second support member 130 and third support member 140 may be formed of a non-magnetic material such as aluminium similarly to that of the first support member 120.

Furthermore, as illustrated in FIGS. 3 and 4, the second support member 130 may include an inner circumferential surface support portion 131 formed in a cylindrical shape to support an inner circumferential surface of the inner stator 220, a lateral surface support portion 132 extended in a flange shape from a front end of the inner circumferential surface support portion 131 to support a front lateral surface of the inner stator 220, and a fixing support portion 133 extended and formed toward the front side with a predetermined distance along the circumferential direction from the lateral surface support portion 132 to be coupled to the frame 110. A fastening groove 133a and a reference groove 133b may be formed at an end of the fixing support portion 133 to correspond to the fastening hole 112 and reference hole 113 of the frame, respectively.

A connecting support portion 134 may be bent and extended at an inner circumferential surface of the inner circumferential surface support portion 131 to be bolt-fastened with the third support member 140 while at the same time supporting a rear end of the second resonant spring 333 which will be described later.

The compressor unit (C) may include a cylinder 310 inserted and coupled to the cylinder hole 111 of the frame 110, a piston 320 inserted into the cylinder 310 in a reciprocating manner to compress refrigerant, and a resonant unit 330 coupled to the piston 320 to guide the resonant movement of the piston 320.

The cylinder 310 may be formed in a cylindrical shape to be inserted and coupled to the cylinder hole 111 of the frame 110, and a discharge valve 340 for opening or closing the compression space (S1) may be detachably provided at a leading end surface of the cylinder 310. Furthermore, the cylinder 310 may be preferably formed of a material having a higher rigidity than that of cast iron or at least that of the frame 110 by considering an abrasion due to the piston 320 since the inner circumferential surface thereof forms a bearing surface to the piston 320 made of cast iron.

The piston 320 may be formed in a penetrating manner with a suction passage (F) to inhale refrigerant into the compression space (S1) of the cylinder 310, and a suction value 350 for opening or closing the suction passage (F) may be provided at a leading end surface of the piston 320. Furthermore, the piston 320 may be preferably formed of the same material as that of the cylinder 310 or formed of a material having at least similar rigidity to that of the cylinder 310, thereby reducing an abrasion to the cylinder 310.

The resonant unit 330 may include a spring support 331 coupled to the piston 320, and a first resonant spring 332 and a second resonant spring 333 provided at the forward and backward directions of the spring support 331, respectively. The first resonant spring 332 and second resonant spring 333 may be provided with one for each, or both the first resonant spring 332 and second resonant spring 333 may be provided with a plural number, respectively. When the first resonant spring 332 and second resonant spring 333 are provided with one for each, it may facilitate the assembly, and when the first resonant spring 332 and second resonant spring 333 are provided with a plural number, respectively, side forces may be cancelled out, thereby enhancing the straightness of the piston 320. Furthermore, as illustrated in FIG. 2, the resonant unit 330 may include a plurality of first resonant springs 332 and one second resonant spring 333.

Here, when there is a plurality of resonant springs, any one of the plurality of resonant springs may be preferably provided such that an end thereof faces the opposite direction of gravity, thereby preventing the side forces and sagging of the mover as well as the piston.

On the drawing, unexplained reference numeral 321 is a sliding portion of the piston.

The working effect of the foregoing reciprocating compressor according to the present embodiment will be described below.

In other words, when power is applied to the coil 221 of the reciprocating motor 200, a magnetic flux is formed between the outer stator 210 and inner stator 220. Then, the mover 230 placed at a gap between the outer stator 210 and inner stator 220 continuously performs a reciprocating movement by the resonant unit 330 while moving along the direction of a magnetic flux. Then, the piston 320 coupled to the mover 230 may repeat a series of processes of inhaling, compressing and discharging refrigerant while performing a reciprocating movement within the cylinder 310.

Here, the reciprocating motor 200 may be separated from the cylinder 310 constituting the compressor unit (C) by the first support member 120 and second support member 130 with a non-magnetic material by a predetermined distance, thereby preventing a magnetic flux generated between the outer stator 210 and inner stator 220 of the reciprocating motor 200 in advance from being leaked to the cylinder 310 and piston 320. Through this, the magnetic flux leakage of the reciprocating motor 200 may be reduced to enhance motor efficiency as well as a magnetic flux generated from the reciprocating motor 200 may not be leaked to the cylinder 310 and piston 320 so as to form the cylinder 310 and piston 320 with a magnetic material having high abrasion resistance, thereby reducing the production cost of the compressor and enhancing the reliability and performance.

On the other hand, in a reciprocating compressor according to the present embodiment, the motor unit (M) and compressor unit (C) may be separately disposed, and the outer stator 210 and inner stator 220 may be separately assembled, thereby facilitating the concentricity of the mover 230 of the reciprocating motor 200 constituting the motor unit (M) and the piston 320 constituting the compressor unit (C) to coincide.

In other words, in a reciprocating compressor according to the present embodiment, the outer stator 210 and frame 110 are individually fabricated and then the outer stator 210 and frame 110 are inserted into a mold to form the first support member 120 using an insert die casting method. The first support member 120 is integrally molded on an edge surface of the frame 110 while surrounding and fixing an outer circumferential surface of the outer stator 210. As a result, a so-called outer block (B1) may be formed.

At the same time, the inner stator 220, second support member 130 and third support member 140 may be individually fabricated to insert the second support member 130 into an inner circumferential surface of the inner stator 220 as well as place the third support member 140 on a rear surface of the inner stator 220, and then fasten the second support member 130 with the third support member 140 using a bolt 150, thereby supporting the inner stator 220. As a result, a so-called inner block (B2) may be formed.

At the same time, the spring support 331 and mover 230 may be coupled to the piston 320. As a result, a so-called moving block (B3) may be formed.

Of the foregoing blocks, the inner block (B2) and moving block (B3) may be first assembled and then the outer block (B1) may be assembled.

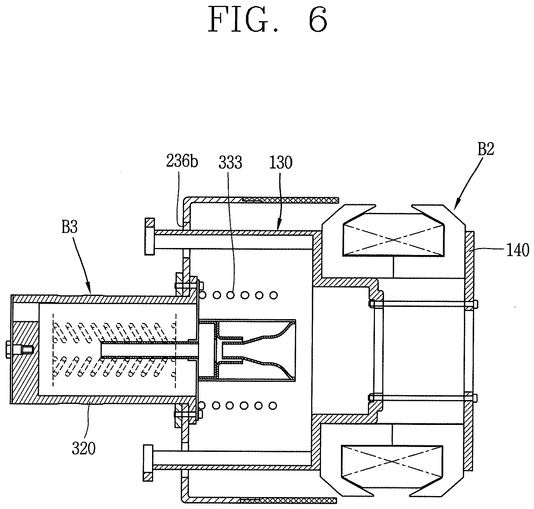

In other words, as illustrated in FIG. 6, the second support member 130 coupled to the inner stator 220 is passed through the frame side through holes 236b of the mover to allow the inner block (B2) and moving block (B3) to be temporarily coupled to each other. At this time, the second resonant spring 333 is inserted between the inner block (B2) and moving block (B3).

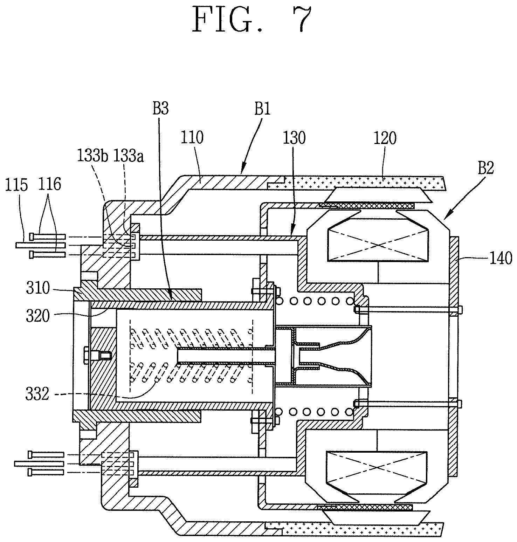

Next, as illustrated in FIG. 7, the cylinder 310 is inserted into the frame 110 coupled to the outer stator 210, and the piston 320 coupled to the spring support 331 and mover 230 is inserted into the cylinder 310 to take a position. At this time, a plurality of first resonant springs 332 may be disposed such that they are located on a front surface of the spring support 331 and a rear surface of the frame 110.

Next, it is fastened and fixed to the frame 110. At this time, the concentricity of the cylinder 310 and piston 320 is allowed to coincide with each other using a thickness gauge (not shown) in a state that the reference hole 113 of the frame 110 is inserted into the reference groove 133b of the second support member 130 using the reference pin 115 passing through the reference hole 113 of the frame 110, and then the frame 110 and second support member 130 are fastened with the fastening bolt 116.

On the other hand, each of the blocks may be assembled in the following sequence.

In other words, the cylinder 310 is inserted into the frame 110 coupled to the outer stator 210 constituting the outer block (B1), and the piston 320 coupled to the spring support 331 and mover 230 constituting the moving block (B3) is inserted into the cylinder 310 to take a position. At this time, a plurality of first resonant springs 332 are disposed such that they are located on a front surface of the spring support 331 and a rear surface of the frame 110.

Next, the second support member 130 coupled to the inner stator 220 constituting the inner block (B2) is fastened and fixed to the frame 110. At this time, the concentricity of the cylinder 310 and piston 320 is allowed to coincide with each other using a thickness gauge (not shown) in a state that the reference pin 115 passing through the reference hole 113 of the frame 110 is inserted into the reference groove 133b of the second support member 130, and then the frame 110 and second support member 130 are bolt-fastened with each other.

In this manner, the motor unit and compressor unit of the reciprocating compressor may be separately disposed and the outer stator and inner stator of the reciprocating motor may be separately assembled, thereby facilitating the concentricity of the motor unit and compressor unit to coincide. Furthermore, the motor unit and compressor unit of the reciprocating compressor may be divided into several blocks for assembly, thereby simplifying assembly process.

## Claims

1. A reciprocating compressor, comprising:
an outer stator (210);
an inner stator (220) provided with a predetermined gap at an inner side of the outer stator;
a mover (230) configured to perform a reciprocating movement at a gap between the outer stator and inner stator;
a piston (320) coupled to the mover to perform a reciprocating movement therewith;
a cylinder (310) into which the piston is inserted to form a compression space while performing a reciprocating movement;
a frame (110) coupled to the cylinder;
a first support member (120) coupled to the outer stator to be coupled to the frame; and
a second support member (130) separated from the first support member but coupled to the inner stator to be coupled to the frame,
wherein the second support member (130) comprises:
an inner circumferential surface support portion (131) formed in a cylindrical shape to support an inner circumferential surface of the inner stator; and
a lateral surface support portion (132) extended in a flange shape from one lateral surface of the inner circumferential surface support portion to support one lateral surface of the inner stator, and
wherein the mover (230) comprises:
a magnet holder (231) coupled to the piston; and a magnet (232) coupled to the magnet holder,
**characterized in that** the second support member (130) further comprises a fixing support portion (133) extended and formed in the reciprocating direction of the piston with a predetermined distance along the circumferential direction from the lateral surface support portion (132) to be coupled to the frame (110),
wherein a through hole (236b) is formed at the magnet holder to allow the fixing support portion of the second support member to pass therethrough.

2. The reciprocating compressor of claim 1, wherein a connecting support portion (134) is bent and extended at an inner circumferential surface of the inner circumferential surface support portion to be bolt-fastened with a support member (140) for supporting the other lateral surface of the inner stator.

3. The reciprocating compressor of any one of claims 1 and 2, wherein the first support member (120) is integrally formed on the frame (110) by insert-die-casting or molding.

4. The reciprocating compressor of any of claims 1 to 3, wherein a coil (225) is provided at the inner stator (220) to correspond to the magnet (232) provided in the mover.

5. The reciprocating compressor of claim 1, wherein the second support member (130) is disposed on one lateral surface of the axial direction of the inner stator (220), and a third support member (140) is disposed on the other lateral surface of the axial direction of the inner stator, and the third support member is coupled to the second support member.

6. The reciprocating compressor of claim 5, wherein the first support member (120), the second support member (130) and third support member (140) are formed of a non-magnetic material.

7. The reciprocating compressor of claim 6, wherein the cylinder (310) and the piston (320) are formed of a magnetic material.

8. The reciprocating compressor of any one of claims 5 through 7, wherein the first support member (120) and the third support member (140) are separated from each other by a predetermined distance.

9. The reciprocating compressor of any one of claims 1 through 8, wherein a spring support member (331) is coupled to the piston (320), and a first resonant spring (332) for elastically supporting the piston is provided between the spring support member (331) and the frame (110).

10. The reciprocating compressor of claim 9, wherein the first resonant spring (332) comprises a plurality of coil springs, and at least any one of the plurality of coil springs is provided such that an end of a winding direction thereof faces the opposite direction of gravity.

11. The reciprocating compressor of claim 9 or 10, insofar as referring to claim 7, wherein a connecting support portion (134) extended in a flange shape from an end portion inserted into an inner circumferential surface of the inner stator (220) is formed on an inner circumferential surface of the second support member (130), and
a second resonant spring (333) is provided between the connecting support portion (134) and the piston (320).

## Patentansprüche

1. Kolbenkompressor, aufweisend:
einen äußeren Stator (210);
einen inneren Stator (220), der mit einem vorgegebenen Spalt an einer Innenseite des äußeren Stators bereitgestellt ist;
einen Antrieb (230), der konfiguriert ist, um an einem Spalt zwischen dem äußeren Stator und dem inneren Stator eine Hin- und Her-Bewegung durchzuführen;
einen Kolben (320), der mit dem Antrieb gekoppelt ist, um mit ihm eine Hin- und Her-Bewegung durchzuführen;
einen Zylinder (310), in welchem der Kolben eingesetzt ist, um während der Durchführung einer Hin- und Her-Bewegung einen Kompressionsraum zu bilden;
einen mit dem Zylinder gekoppelten Rahmen (110);
ein erstes Trägerelement (120), das mit dem äußeren Stator gekoppelt ist, um mit dem Rahmen gekoppelt zu werden; und
ein zweites Trägerelement (130), das getrennt von dem ersten Trägerelement ist, aber mit dem inneren Stator gekoppelt ist, um mit dem Rahmen gekoppelt zu werden,
wobei das zweite Trägerelement (130) aufweist:
einen zylinderförmigen Innenumfangsfläche-Trägerabschnitt (131) zum Tragen einer Innenumfangsfläche des inneren Stators; und
einen sich von einer Seitenfläche des Innenumfangsfläche-Trägerabschnitts flanschförmig erstreckenden Seitenfläche-Trägerabschnitt (132) zum Tragen einer Seitenfläche des inneren Stators, und
wobei der Antrieb (230) aufweist:
einen mit dem Kolben gekoppelten Magnethalter (231); und einen mit dem Magnethalter gekoppelten Magnet (232),
**dadurch gekennzeichnet, dass** das zweite Trägerelement (130) ferner einen Befestigungsträgerabschnitt (133) aufweist, der in Laufrichtung des Kolbens mit einem vorgegebenen Abstand entlang der Umfangsrichtung von dem Seitenfläche-Trägerabschnitt (132) sich erstreckt und gebildet ist, um mit dem Rahmen (110) gekoppelt zu werden,
wobei ein Durchgangsloch (236b) an dem Magnethalter gebildet ist, um einen Durchgang des Befestigungsträgerabschnitts des zweiten Trägerelements zu erlauben.

2. Kolbenkompressor nach Anspruch 1, wobei an einer Innenumfangsfläche des Innenumfangsfläche-Trägerabschnitts ein Verbindungsträgerabschnitt (134) gebogen ist und sich erstreckt, um an ein Trägerelement (140) angeschraubt zu werden, um die andere Seitenfläche des inneren Stators zu tragen.

3. Kolbenkompressor nach einem der Ansprüche 1 und 2, wobei das erste Trägerelement (120) durch Einsatzformgießen oder Formen integral an dem Rahmen (110) gebildet ist.

4. Kolbenkompressor nach einem der Ansprüche 1 bis 3, wobei an dem inneren Stator (220) eine Spule (225) als entsprechendes Gegenstück zu dem in dem Antrieb bereitgestellten Magnet (232) bereitgestellt ist.

5. Kolbenkompressor nach Anspruch 1, wobei das zweite Trägerelement (130) an der einen axialen Seitenfläche des inneren Stators (220) angeordnet ist und ein drittes Trägerelement (140) an der anderen axialen Seitenfläche des inneren Stators angeordnet ist und das dritte Trägerelement mit dem zweiten Trägerelement gekoppelt ist.

6. Kolbenkompressor nach Anspruch 5, wobei das erste Trägerelement (120), das zweite Trägerelement (130) und das dritte Trägerelement (140) aus einem nichtmagnetischen Material hergestellt sind.

7. Kolbenkompressor nach Anspruch 6, wobei der Zylinder (310) und der Kolben (320) aus einem magnetischen Material hergestellt sind.

8. Kolbenkompressor nach einem der Ansprüche 5 bis 7, wobei das erste Trägerelement (120) und das dritte Trägerelement (140) in einem vorgegebenen Abstand voneinander getrennt sind.

9. Kolbenkompressor nach einem der Ansprüche 1 bis 8, wobei ein Federträgerelement (331) mit dem Kolben (320) gekoppelt ist und wobei zwischen dem Federträgerelement (331) und dem Rahmen (110) eine erste Resonanzfeder (332) zum elastischen Tragen des Kolbens bereitgestellt ist.

10. Kolbenkompressor nach Anspruch 9, wobei die erste Resonanzfeder (332) mehrere Spiralfedern aufweist und wobei mindestens eine der mehreren Spiralfedern derart bereitgestellt ist, dass ein Ende einer Windungsrichtung in die zur Schwerkraftrichtung entgegengesetzte Richtung schaut.

11. Kolbenkompressor nach Anspruch 9 oder 10 insofern als mit Bezug auf Anspruch 7, wobei an einer Innenumfangsfläche des zweiten Trägerelements (130) ein Verbindungsträgerabschnitt (134) gebildet ist, der sich flanschförmig von einem in einer Innenumfangsfläche des inneren Stators (220) eingesetzten Endabschnitt erstreckt, und
eine zweite Resonanzfeder (333) zwischen dem Verbindungsträgerabschnitt (134) und dem Kolben (320) bereitgestellt ist.

## Revendications

1. Compresseur alternatif comprenant :
un stator extérieur (210) ;
un stator intérieur (220) doté d'une fente prédéterminée sur un côté intérieur du stator extérieur ;
un élément de déplacement (230) configuré pour réaliser un mouvement alternatif sur une fente entre le stator extérieur et le stator intérieur ;
un piston (320) couplé à l'élément de déplacement pour réaliser un mouvement alternatif avec celui-ci ;
un cylindre (310) dans lequel le piston est inséré pour former un espace de compression tout en réalisant un mouvement alternatif ;
un cadre (110) couplé au cylindre ;
un premier élément de support (120) couplé au stator extérieur à coupler au cadre ; et
un deuxième élément de support (130) séparé du premier élément de support mais couplé au stator intérieur à coupler au cadre ;
dans lequel le deuxième élément de support (130) comprend :
une partie de support de surface circonférentielle interne (131) formée dans une forme cylindrique pour supporter une surface circonférentielle interne du stator intérieur ; et
une partie de support de surface latérale (132) étendue dans une forme de bride depuis une surface latérale de la partie de support de surface circonférentielle interne pour supporter une surface latérale du stator intérieur, et
dans lequel l'élément de déplacement (230) comprend :
un élément de maintien d'aimant (231) couplé au piston ; et un aimant (232) couplé à l'élément de maintien d'aimant,
**caractérisé en ce que** le deuxième élément de support (130) comprend en outre une partie de support de fixation (133) étendue et formée dans la direction alternative du piston à une distance prédéterminée le long de la direction circonférentielle depuis la partie de support de surface latérale (132) à coupler au cadre (110),
dans lequel un trou débouchant (236b) est formé sur l'élément de maintien d'aimant pour permettre à la partie de support de fixation du deuxième élément de support de passer au travers de celui-ci.

2. Compresseur alternatif selon la revendication 1, dans lequel une partie de support de connexion (134) est pliée et étendue sur une surface circonférentielle intérieure de la partie de support de surface circonférentielle interne à fixer par boulon avec un élément de support (140) pour supporter l'autre surface latérale du stator intérieur.

3. Compresseur alternatif selon l'une quelconque des revendications 1 et 2, dans lequel le premier élément de support (120) est intégralement formé sur le cadre (110) par coulage ou moulage sous pression par insertion.

4. Compresseur alternatif selon l'une quelconque des revendications 1 à 3, dans lequel une bobine (225) est prévue sur le stator intérieur (220) pour correspondre à l'aimant (232) prévu dans l'élément de déplacement.

5. Compresseur alternatif selon la revendication 1, dans lequel le deuxième élément de support (130) est disposé sur une surface latérale de la direction axiale du stator intérieur (220), et un troisième élément de support (140) est disposé sur l'autre surface latérale de la direction axiale du stator intérieur, et le troisième élément de support est couplé au deuxième élément de support.

6. Compresseur alternatif selon la revendication 5, dans lequel le premier élément de support (120), le deuxième élément de support (130) et le troisième élément de support (140) sont formés en un matériau non magnétique.

7. Compresseur alternatif selon la revendication 6, dans lequel le cylindre (310) et le piston (320) sont formés en un matériau magnétique.

8. Compresseur alternatif selon l'une quelconque des revendications 5 à 7, dans lequel le premier élément de support (120) et le troisième élément de support (140) sont séparés l'un de l'autre d'une distance prédéterminée.

9. Compresseur alternatif selon l'une quelconque des revendications 1 à 8, dans lequel un élément de support à ressort (331) est couplé au piston (320), et un premier élément résonant (332) pour le support élastique du piston est prévu entre l'élément de support à ressort (331) et le cadre (110).

10. Compresseur alternatif selon la revendication 9, dans lequel le premier ressort résonant (332) comprend une pluralité de ressorts à bobine, et au moins l'un quelconque de la pluralité de ressorts à bobine est prévu de sorte qu'une extrémité d'une direction d'enroulement de celui-ci fasse face à la direction opposée de gravité.

11. Compresseur alternatif selon la revendication 9 ou 10, dans la mesure où elle se réfère à la revendication 7, dans lequel une partie de support de raccordement (134) étendue dans une forme de bride depuis une partie d'extrémité insérée dans une surface circonférentielle intérieure du stator intérieur (220) est formée sur une surface circonférentielle intérieure du second élément de support (130), et
un second ressort résonant (333) est prévu entre la partie de support de raccordement (134) et le piston (320).
